# EUROPEAN PATENT APPLICATION

(11) **EP 4 769 932 A1**
(43) Date of publication of application: **01.07.2026**
(21) Application number: 25226794.3
(22) Date of filing: 23.12.2025
(51) Int. Cl.: H02P 21/05, H02P 29/50

(54) **CURRENT FEEDBACK BASED HARMONIC COMPENSATION**

(30) Priority: 31.12.2024 US 202419006821
(71) Applicant: Atieva, Inc., Newark, CA 94560 (US)
(72) Inventor: ACHARYA, Bharadwaj, Newark, CA, 94560 (US)
(74) Representative: Daub, Thomas

(57) **Abstract**

An electric vehicle (EV) comprising a three-phase motor comprising a rotor and a stator, wherein the stator comprises N number of slots, and an inverter, configured to receive a sensed a three-phase current of the three-phase motor, and generate, based on the three-phase current, a three-phase alternating current (AC) voltage. The three-phase AC voltage comprises a harmonic that is associated with a fundamental frequency associated with a speed of a rotation of the three-phase motor. The three-phase AC voltage is fed as input to windings of the three-phase motor and causes the rotation of the rotor.

## Description

### FIELD

Embodiments disclosed relate generally to automobile technology, and more particularly, to reducing harmonic components that are associated with operation of an electric motor.

### BACKGROUND

Electric Vehicles (EVs) utilize electric motors rather than internal combustion engines for propulsion. EVs typically convert energy that is stored in a battery pack to mechanical energy such as torque and rotational speed of the motor. During operation of a motor, unwanted vibrations may occur. These vibrations may be caused by various factors such as electric or mechanical imbalance, faulty gears, loose or failed bearings, magnetics, play in the mounting of a motor, or internal play (e.g., loose parts) within the motor.

Unwanted motor vibrations may lead to reduced efficiency, increased mechanical wear, and/or early failure of a motor. These motor vibrations may also be felt or heard by passengers in the vehicle, leading to reduced comfort or causing irritation to those passengers. It is desirable to reduce some motor vibrations.

### SUMMARY

The following presents a simplified summary of one or more aspects in order to provide a basic understanding of such aspects. This summary is not an extensive overview of all contemplated aspects. This summary neither identifies key or critical elements of all aspects nor delineates the scope of any or all aspects. Its sole purpose is to present some concepts of one or more aspects in a simplified form as a prelude to the more detailed description that is presented later.

Permanent magnet motors with slotted stators may exhibit a noise which is the result of each magnetic field of the rotor passing the stator slots. Interruptions in the magnetic field caused by the passage of the magnetic through each slot may cause unwanted vibration of the motor.

In an aspect of the present disclosure, a system comprises a three-phase motor and an inverter. The three-phase motor comprises a rotor and a stator. The stator comprises N number of slots. The inverter may be configured to receive a sensed a three-phase current of the three-phase motor, and generate, based on the three-phase current, a three-phase alternating current (AC) voltage that is coupled to windings of the three-phase motor and to cause a rotation of the rotor. The inverter generates the three-phase AC voltage with a harmonic with an order of N relative to a fundamental frequency associated with a speed of the rotation of the three-phase motor. This added harmonic (e.g., a ripple at Nth order) sits on top of the fundamental frequency of the AC voltage, and counteracts vibration that may be caused by slot pass harmonics.

In an embodiment, the rotor comprises magnets which are aligned axially along the rotor. In an embodiment, generating the three-phase AC voltage comprising the harmonic with the order of N comprises combining a rotating voltage reference frame with the harmonic to a second rotating voltage reference frame that is determined based on a target torque command.

In an embodiment, generating the rotating voltage reference frame with the harmonic comprises transforming the three-phase current to a rotating current reference frame, adding the harmonic to the rotating current reference frame by applying a park transform with an order of M relative to the fundamental frequency, resulting in a modified rotating current reference frame, and transforming the modified rotating current reference frame to the rotating voltage reference frame with the harmonic to the order of M, with a proportional integral (PI) algorithm. In an embodiment, M is one third of N.

In an embodiment, to generate the rotating voltage reference frame with the harmonic further comprises to apply an adaptive low pass filter to the rotating current reference frame with the harmonic, and apply the PI algorithm to an output of the adaptive low pass filter. The adaptive low pass filter may be configured to adjust a cut off frequency based on the speed of the rotation of the three-phase motor. In an embodiment, an integral parameter of the PI algorithm is greater than a proportional parameter of the PI algorithm.

In an embodiment, the three-phase motor comprises an induction motor. In an embodiment, the three-phase motor comprises permanent magnet motor (e.g., permanent magnets fixed on the rotor). Other technical features may be readily apparent to one skilled in the art from the following figures, descriptions, and claims.

### BRIEF DESCRIPTION OF THE DRAWINGS

The present disclosure will be understood more fully from the detailed description given below and from the accompanying drawings of various embodiments, which, however, should not be taken to limit the embodiments described and illustrated herein, but are for explanation and understanding.
FIG. 1 shows an illustration of an EV with harmonic compensation of its drive unit 104, in accordance with an embodiment.
FIG. 2 shows an example of vector-based control of a drive unit, in accordance with an embodiment.
FIG. 3 shows components of an electric motor, in accordance with an embodiment.
FIG. 4 shows an example of a motor and slot harmonic without harmonic compensation.
FIG. 5 shows an example of a motor and reduced slot harmonic when using harmonic compensation, in accordance with an embodiment.
FIG. 6 shows a system level diagram for controlling a motor, in accordance with an embodiment.
FIG. 7 shows a control current operation in the fundamental θ1 frame, in accordance with an embodiment.
FIG. 8 shows an example process for injecting a harmonic component into a three-phase inverter output to reduce slot harmonics, in accordance with an embodiment.
FIG. 9 shows a flow diagram of a method which may reduce slot harmonics, in accordance with an embodiment.
FIG. 10 shows example measurements associated with motor harmonics, in accordance with an embodiment.
FIG. 11 shows example measurements associated with motor harmonics, in accordance with an embodiment.
FIG. 12 is a high-level view of some embodiments of a vehicle, in accordance with an embodiment.
FIG. 13 shows a frequency cut plot with respect to motor torque and generated harmonic content, in accordance with an embodiment.

### DETAILED DESCRIPTION

In the following description, numerous details are set forth. It will be apparent, however, to one of ordinary skill in the art having the benefit of this disclosure, that the embodiments described herein may be practiced without these specific details. In some instances, well-known structures and devices are shown in block diagram form, rather than in detail, in order to avoid obscuring the embodiments described herein.

Embodiments disclosed relate generally to automobile technology, and more particularly, to reducing harmonic components that are associated with operation of an electric motor.

An electric vehicle (EV) may comprise one or more drive units, each drive unit comprising an electric motor and inverter. The inverter may generate an alternating current (AC) voltage that is fed to the electric motor to cause a desired torque and/or speed of the electric motor. The electric motor may be a three-phase electric motor (e.g., a three-phase permanent magnet motor). The motor may comprise a stator that comprises windings and a rotor that comprises magnets. When a current is passed through each winding, a magnetic field is generated by the winding and passing through the core of the stator, exerting a force on the magnets, thereby creating a torque on the rotor and causing the rotor to rotate. A controller may adjust a frequency and magnitude of the current through the windings to command the motor to rotate at a desired speed, based on sensed feedback from the motor (e.g., motor current, motor speed, and/or motor position).

A stator my comprise a plurality of slots. Slots on a stator are grooves along an inner circumference of the stator that channel copper windings. The slot design impacts a motor's performance because they affect the distribution of the magnetic flux which drives the rotation of the motor. The design of the slots include the number of slots on the stator, the layout, and shape of each slot, and each of these impact the performance of the motor. The size and number of slots determine how much wire can be contained in each coil. The design of the slots affects the motor's torque, smoothness of delivery, and overall efficiency.

Permanent magnet motors with slotted stators may exhibit a noise caused by the rotor passing the stator slots. These slots may create harmonics in the airgap flux. The airgap refers to the space between stator and rotor, and the airgap flux refers to the magnetic field in this space. Each time a magnetic field passes a slot, the magnetic field may be interrupted, causing an air gap disturbance. Each disturbance can create a slight mechanical displacement of the rotor and/or stator, resulting in a vibration at a harmonic relative to the fundamental frequency (e.g., the rotational speed of the rotor). As a result of this 'slot pass harmonic', a vibration that is a function of the number of slots may be introduced in the system.

Existing solutions to mitigate this slot harmonic may include reducing slot width and/or staggering placement of magnets on the rotor, so that the magnets are not axially aligned. Such solutions, however, put the burden on the mechanical design of the motor, and the fabrication of the motor per the design. For example, staggering the magnet placement may not accurately address differences slot harmonics when minor deviations in mechanical features (e.g., slot placements, magnet placement, rotor or stator size, etc.) are present from one motor to another. Further, such designs may be costly to implement and error prone. As such, it may be desirable to reduce or eliminate slot harmonics using a software-based approach.

Aspects of the present disclosure relate to system and method that compensates for this slot harmonic by introducing a counteracting ripple in the input AC voltage to the motor. A harmonic compensation control may include performing a direct-axis and quadrature-axis (DQ) Field Oriented Control (FOC) operation to control torque in the fundamental or θ1 frame, and applying this to the Nth order electrical frame. FOC is a control scheme for induction motors in which a d-q coordinates reference frame is locked to the motor flux space vector and used to achieve decoupling between the motor flux and torque of an electric motor. The motor flux and torque are separately controlled by the stator direct-axis and quadrature-axis currents, respectively. To control the Nth harmonic, the system tracks currents in the θN/3 electrical frame.

In an aspect, a system comprises a three-phase motor and an inverter. The three-phase motor comprises a rotor and a stator. The stator comprises N number of slots. The inverter be configured to receive a sensed a three-phase current of the three-phase motor, and generate, based on the three-phase current, a three-phase alternating current (AC) voltage that is coupled to windings of the three-phase motor and to cause a rotation of the rotor. The inverter generates the three-phase AC voltage with a harmonic with an order of N that is relative to a fundamental frequency associated with a speed of the rotation of the three-phase motor. This synthesized harmonic distortion (e.g., a ripple at Nth order) has a much lower magnitude than the magnitude associated with the fundamental frequency, and counteracts the noise caused by the slot pass harmonics, thereby reducing undesirable vibration of the motor.

Aspects described can be tailored to a variety of motors with different numbers of slots, and therefore can address a range of harmonics (Nth order harmonic) based on the current feedback of the motor. To control the Nth harmonic, the system tracks currents in the θN/3 electrical frame. For example, a motor with 72 slots distributed evenly over 360 degrees may exhibit a slot pass noise with 72^{nd} order. Assuming that the motor is a three-phase motor with 3 pole pairs (6 poles total), the system may reduce the 72nd harmonic of the motor by tracking currents of the motor in the θ24 electrical frame. More generally, for a motor with three phase input that exhibits noise in the θN mechanical frame of reference, the system may track currents and inject a harmonic in the θN/3 electrical frame.

Some portions of the detailed description that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "receiving", "transmitting", "storing", "determining", "accessing", "referencing", or the like, refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices.

The embodiments discussed herein may also relate to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions.

The algorithms and displays presented herein are not inherently related to any particular computer or other apparatus. Various general-purpose systems may be used with programs in accordance with the teachings herein, or it may prove convenient to construct a more specialized apparatus to perform the required method steps. The required structure for a variety of these systems will appear from the description below. In addition, the embodiments discussed herein are not described with reference to any particular programming language. It will be appreciated that a variety of programming languages may be used to implement the teachings as described herein.

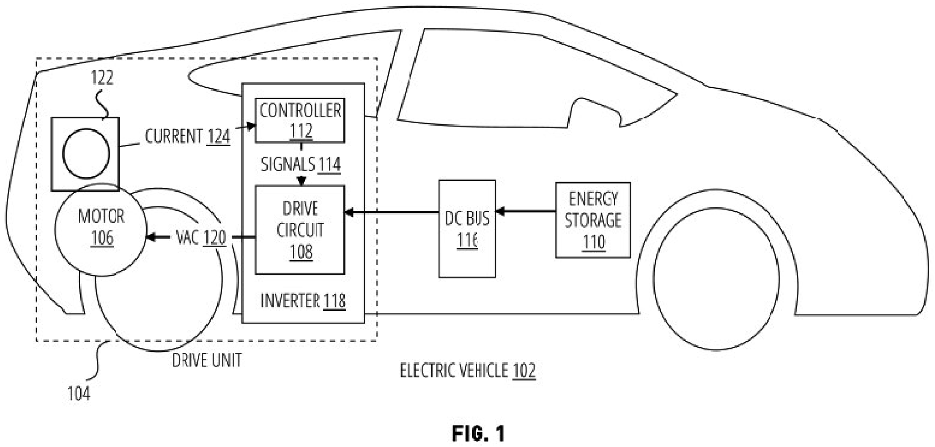

FIG. 1 shows an illustration of an EV 102 with harmonic compensation of its drive unit 104, in accordance with an embodiment. Drive unit 104 comprises a motor 106 and inverter 118. The inverter 118 comprises a controller 112, and drive circuit 108.

EV 102 comprises an energy storage 110 that includes a plurality of battery cells (e.g., cylindrical, prismatic, etc.). These cells may be interconnected electrically in series and parallel to form a desired DC voltage, current capacity, and power output. The energy storage 110 may comprise a battery management system (BMS) and sensors that may sense voltage, current, and temperature at one or more points of the energy storage 110. The energy storage 110 may be connected to a DC/DC converter (not shown) to generate a regulated and steady DC voltage. The output of the DC/DC converter may form the DC bus 116, which may include bus hardware (e.g., a low resistance electrically conductive structure, one or more terminals, etc.)

The EV comprises an electric motor 106. Electric motor 106 may be a three-phase alternating current (AC) electric motor. Electric motor 106 may comprise an induction motor (e.g., a three-phase induction motor), a permanent magnet synchronous motor (PMSM), or other motor. Electric motor 106 may by an alternating current (AC) or AC voltage source, generated by drive circuit 108.

Drive circuit 108 may convert DC voltage from DC bus 116 to three-phase AC voltage, which comprises three output conductors, each with the same sinusoidal voltage, but having a phase that is shifted by 120°. This output is applied to the stator of electric motor 106, which creates a rotating magnetic field that applies a force on a magnet (e.g., on a rotor of the motor 106), resulting in a torque and rotation of the rotor of motor 106. During operation, a current is applied through the stator, which induces a magnetic field and leads to the rotation of the rotor. The rotational speed of the shaft and the applied torque depends on the operating frequency and the number of pole pairs in the motor's windings.

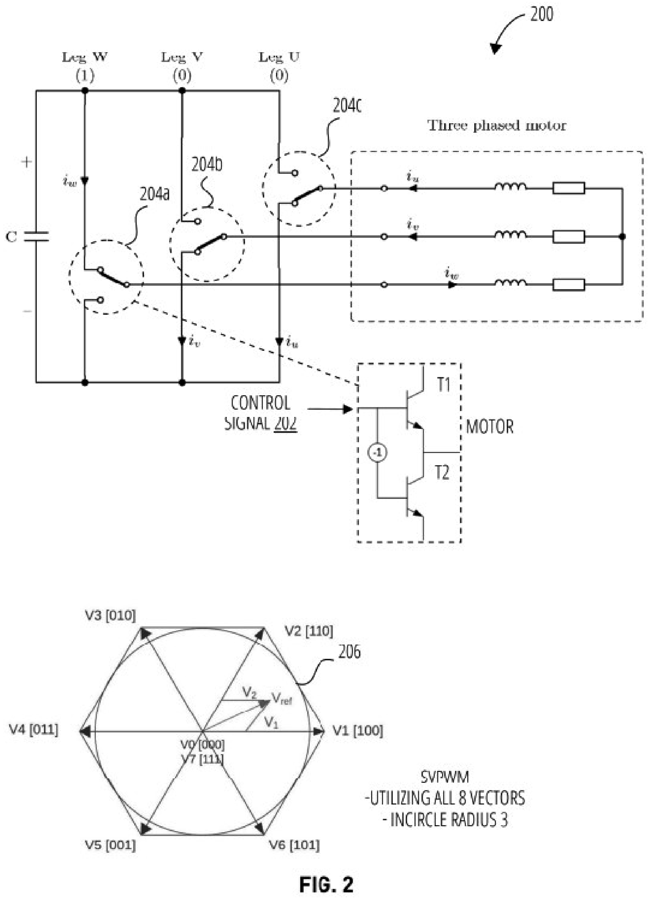

Drive circuit 108 comprises a plurality of power semi-conductors (e.g., six, arranged to form 3 pole pairs), that are coupled to the DC bus 116 of the EV 102, and coupled to the electric motor 106. The plurality of power semi-conductors are configured to drive the electric motor 106 in accordance with control signals 114 generated by controller 112. Drive circuit 108 may be referred to as an inverter. Depending on application, different power switching semi-conductors may be used, such as power transistors, IGBTs, MOSFETs, etc. These are connected to form a circuit that drives current through windings of the motor 106 when the semi-conductors are driven to close (conduct) or open in accordance with the control signals 114. Examples of a drive circuit topology for driving a three-phase motor are shown in FIG. 2.

In an embodiment, EV 102 may comprise two or more drive units (e.g., a front drive unit and a rear drive unit), each with a respective drive circuit 108 and motor 106.

Controller 112 may generate control signals 114 as three pulse width modulated (PWM) signals. Each PWM signal drives a corresponding pair of power semiconductors of drive circuit 108 in the alternate - one of the pair is driven to conduct with the signal, and the other of the pair is driven to open or not conduct, with the inverse of the signal. The states of these three signals relative to each other, and their respective duty cycles may be calculated by controller 112 through mapping of a desired field oriented control frame to space vector in PWM space, as known by one skilled in the art.

Motor 106 may comprise N number of slots, which may be arranged on an interior circumference of the motor's stator. One or more sensors 122 may sense a three-phase current of the motor 106. The controller 112 may receive the sensed a three-phase current 124 of a three-phase motor 106. The controller 112 may generate control signals, based on the three-phase current, to drive the drive circuit 108 of the inverter 118 to generate a three-phase alternating current (AC) voltage 120, which is applied to windings of the three-phase motor 106. The three-phase AC voltage 120 may comprise a harmonic with an order of N relative to a fundamental frequency associated with a speed of a rotation of the three-phase motor 106. This synthesized harmonic with the order of N compensates for the slot harmonic by counteracting the disturbance of the magnetic field caused by each slot. In such a manner, regardless of the speed of the motor, the slot harmonic may be reduced as are vibrations and audible noise associated with the slot harmonic.

FIG. 2 shows an example of vector-based control of a drive unit 200, in accordance with an embodiment.

As described, a drive unit 200 may comprise a drive circuit (e.g., 204a, 204b, and 204c arranged as shown) and a three phase motor. The drive circuit may comprise three legs (e.g., leg W, leg V, leg U), each leg comprising a switch (204a, 204b, 204c) formed from a pair of semiconductors (T1, T2). The legs are driven simultaneously by a corresponding signal of the control signals generated by a controller. Each signal switches between high (1) and low (0). Each pair of semiconductors may be driven by a single control signal 202, where one of the semiconductors (e.g., the bottom semiconductor) of the pair always takes the inverse of the signal so that both are never in the closed position at the same time. Given that there are three switches which can be in two different positions each, the total number of possible switch configuration is 2^3=8. The state of the three signals to the three pairs makes up a vector. V0 is a vector of three signals, each having a low state, expressed as [000]. V1 is a vector where a first signal (e.g., corresponding to leg W) is high, and the remaining signals (corresponding to leg V and leg U) are low, which is expressed as [100]. This vector is illustrated in FIG. 2. V2 is a vector where a first signal (e.g., corresponding to leg W) is high, the second signal (corresponding to leg V) is high, and the third signal (corresponding to leg U) is low, which is expressed as [110], and so on. V7 is a vector where all three signals (e.g., corresponding to leg W, V, and U) are high, which is expressed as [111].

All possible vectors for the three signals may be expressed as such:

| | |
|---|---|
| Vector 0 | [000] |
| Vector 1 | [100] |
| Vector 2 | [110] |
| Vector 3 | [010] |
| Vector 4 | [011] |
| Vector 5 | [001] |
| Vector 6 | [101] |
| Vector 7 | [111] |

This vector table is also shown as a vector diagram 206. Typically (e.g., under driving mode), the voltage reference (Vref) and the desired speed and/or torque of the motor may dictate which vector to command at a given moment in time. For example, depending on the desired rotational speed of the motor, the frequency of the 3 phase AC may be increased or decreased, based on how fast the controller cycles through the vectors. Under space vector pulse width modulation (SVPWM), all possible states (2^3 = 8) may be used over time to command the three-phase motor to rotate. SVPWM uses steady state DC-voltage and the six switches (e.g. transistors) to emulate a three-phase sinusoidal waveform where the frequency and amplitude is adjustable (according to switching frequency, period, and pulse duration).

A controller may map a reference DQ frame to a corresponding SVPWM based on a reference frame of the DQ frame. This may be done for the fundamental frequency as well as a harmonic of the fundamental frequency that is associated with the slot harmonic. The controller may add these DQ frame components together (the fundamental DQ frame with the harmonic DQ frame) to create the desired DQ frame with synthesized distortion, as described further in other sections.

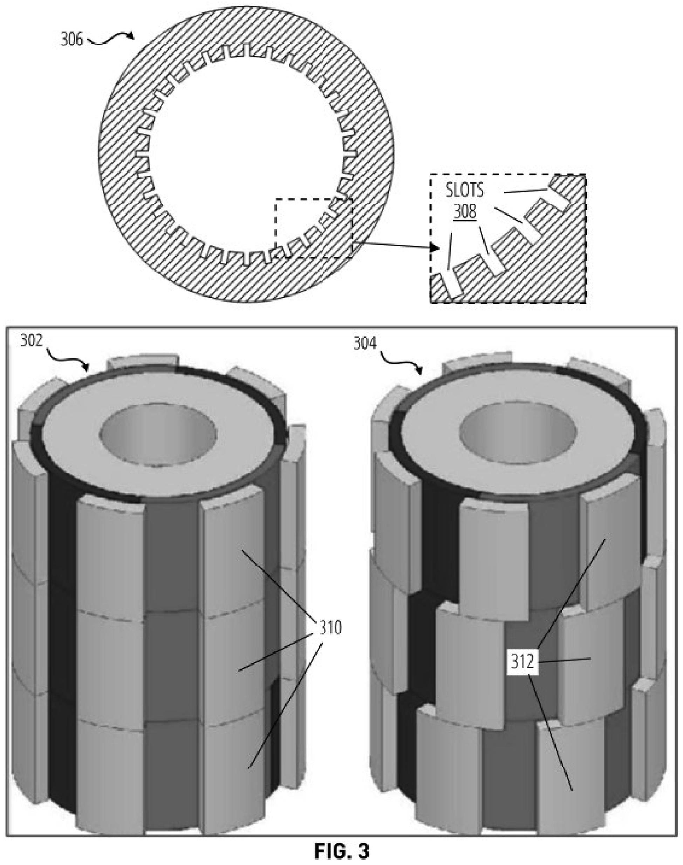

FIG. 3 shows components of an electric motor, in accordance with an embodiment. A side or cross sectional view of a stator 306 is shown. The stator 306 may comprise a plurality of slots 308.

As described, these slots 308 may disturb the magnetic field from magnets of a rotor such as rotor 302, when the rotor rotates, thus causing an unwanted slot harmonic at N number of slots per rotation. Rotor 302 may comprise magnets 310 that are axially aligned as shown.

Existing solutions may use a rotor 304 with magnets 312 that are staggered and not aligned along the axial axis of the rotor. Such an arrangement of magnets 312 may reduce the slot harmonic. This approach, however, may be error prone because a precise skewing of each magnet may be required. Further, this may place additional burden on the design and fabrication of such a rotor - each magnet must be individually fixed to the rotor in a precisely offset manner. Effectiveness of such an approach may be reduced due to deviations in magnet placement.

Aspects described apply a controller-based solution that regulates the harmonic current to a desired value, with a rotor such as rotor 302 with magnets axially aligned in a straight line, by injecting a counteracting harmonic into the input voltage of the motor.

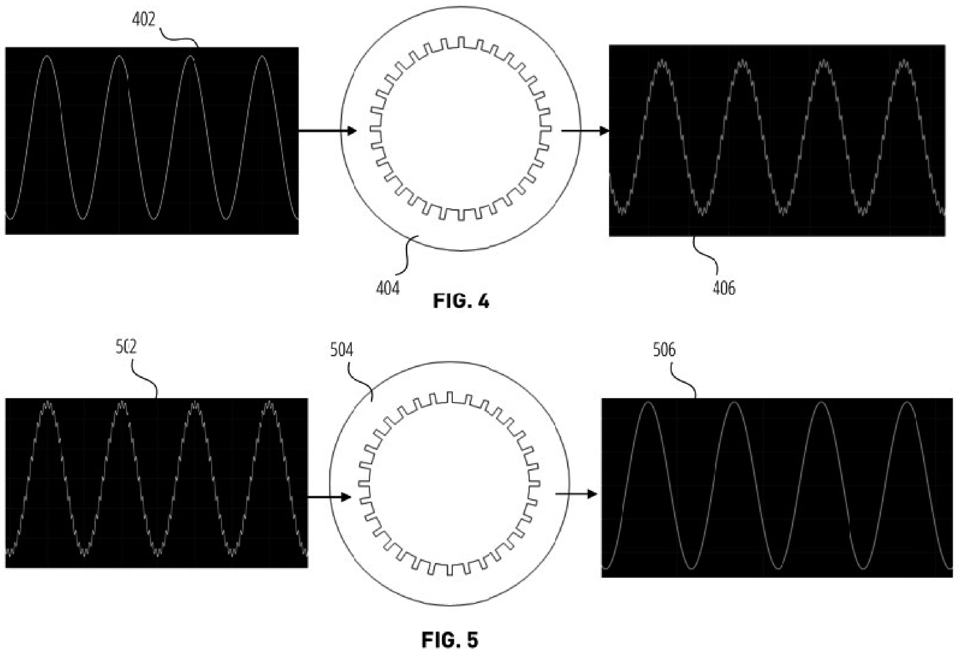

FIG. 4 shows an example of a motor and slot harmonic without harmonic compensation. A graph of clean phase current 402 is shown as input to the motor 404. Clean phase current 402 represents any one of the three-phase AC voltage into the motor 404. An output graph shows the rippled air gap torque 406, where the ripples in the sinusoid have a harmonic N caused by the N number of slots of motor 404. The air gap in an electric motor is the space between the stator and the rotor. This rippled air gap torque 406 with may cause undesirable vibration and/or audible noise.

In contrast, FIG. 5 shows an example of a motor and reduced slot harmonic when using harmonic compensation, in accordance with an embodiment. A rippled harmonic current 502 is input to motor 504. The ripples in rippled harmonic current 502 are generated based on the feedback current of the motor, as described in other sections, and counteract or compensate for the slot harmonic. The resulting movement of the motor in response to this rippled harmonic current 502 is a clean air gap torque 506.

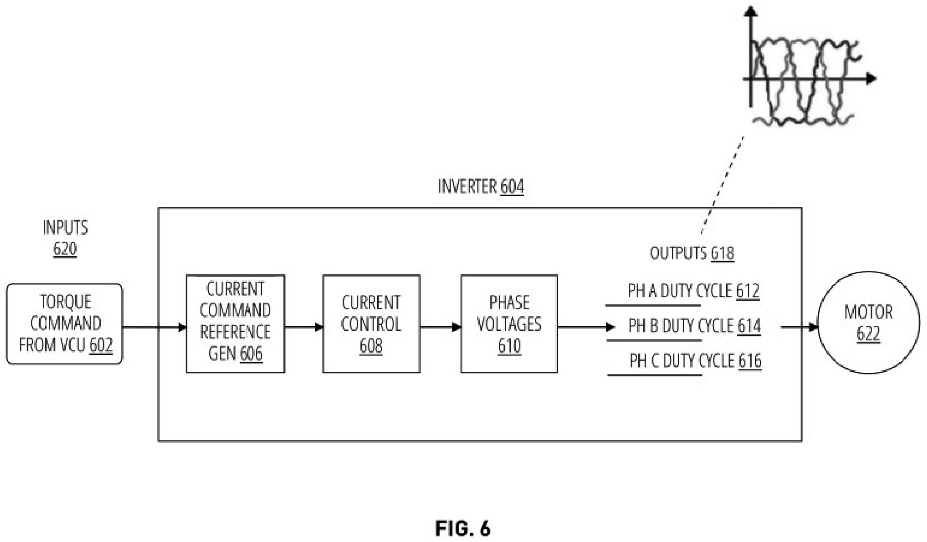

FIG. 6 shows a system level diagram for controlling a motor, in accordance with an embodiment. Generally, a vehicle control unit (VCU) may generate a torque command 602 that represents a desired torque to be output by the motor. This torque may be derived from the current user input (e.g., a throttle position). The torque command 602 is an input 620 into the inverter 604. Inverter 604 comprises a controller (e.g., controller 112) and a drive circuit (e.g., 108) as described in other sections.

At block 606, the controller may generate a current command based on the torque command 602. This may be referred to as a reference current. At block 608, the controller may perform current control comparing the current sensed reference of the motor 622 with the reference current, to generate a current command. At block 610, the controller may convert the current command to a three-phase voltage, and convert that three-phase AC voltage to vector space. The resulting PWM signals are used to drive semiconductors of the drive circuit, resulting in outputs 618.

Outputs 618 comprise a Phase A duty cycle 612, a Phase B duty cycle 614, and Phase C duty cycle 616, each being 120 shifted in phase, and having an injected harmonic ripple of order N. Outputs 618 are applied windings of motor 622 to induce the motor's stator to rotate. As mentioned, due to the ripple, the harmonic component of motor 622 is reduced.

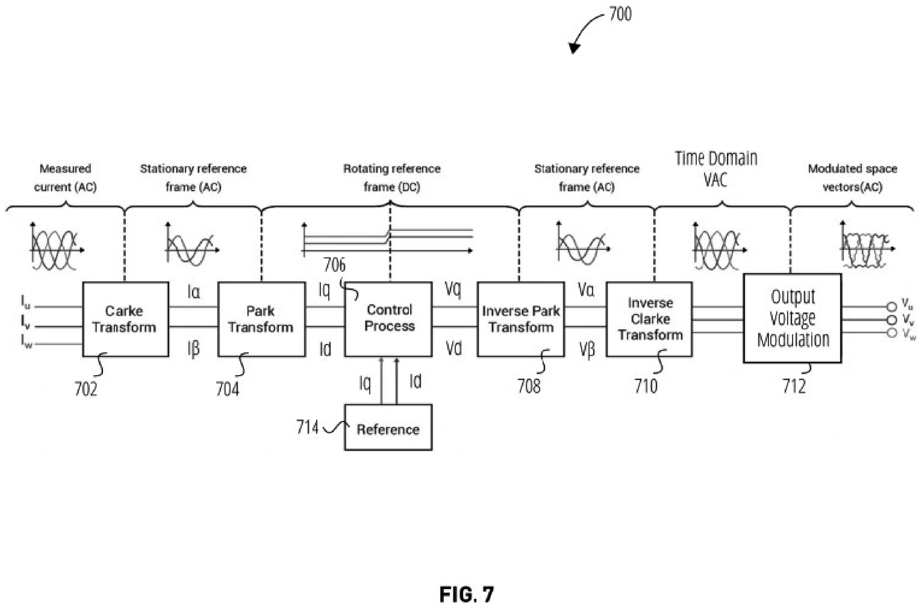

FIG. 7 shows a control current operation in the fundamental θ1 frame, in accordance with an embodiment. Operation 700 may be performed by a processing device such as a controller 112 as described in other sections.

At block 702, the processing device may receive a sensed three-phase AC current of a motor. This three-phase current may be measured at each winding of the motor. The processing device applies a Clarke transformation to the time-domain balanced three-phase components in the *abc* reference frame and outputs a balanced two-phase orthogonal components (Iα and Iβ) in the stationary reference frame. The stationary reference frame refers to the reference frame of the vector (formed from Iα and Iβ) being stationary while the vector rotates in accordance with the change of its components over time.

At block 704, the processing device applies a Park transformation to the two-phase orthogonal components (Iα and Iβ) of a vector. The Park transform converts the two components in the αβ frame to an orthogonal rotating reference frame (dq). The orthogonal rotating reference frame refers to the reference frame (formed by a d axis and q axis) being rotated in accordance with the change in the two-phase orthogonal components. Performing these two transforms consecutively in such a manner may reduce computational load by converting AC current and voltage waveform into DC signals.

At block 706, the processing device performs a control process that takes a reference input 714 comprising Iq and Id which may be determined based on a desired torque command. The controller may then determine a required Iq and Id to achieve the reference Iq and Id (e.g., based on a difference between the reference Idq and sensed Idq). The required Iq and Id may be converted to a Vq and Vd (e.g., with a PI controller or other control loop).

At block 708, the processing device may apply an inverse Park transformation to Vq and Vd to obtain two-phase orthogonal components (Vα and Vβ).

At block 710, the processing device may apply an inverse Clarke transformation on the two-phase orthogonal voltage components to generate the desired time-domain three-phase AC voltage in the abc reference frame.

At block 712, the processing device may generate a space vector pulse width modulation waveform corresponding to the desired time-domain three-phase AC voltage, and commutate the drive circuit with those PWM signals to generate a three-phase AC voltage as modulated space vectors.

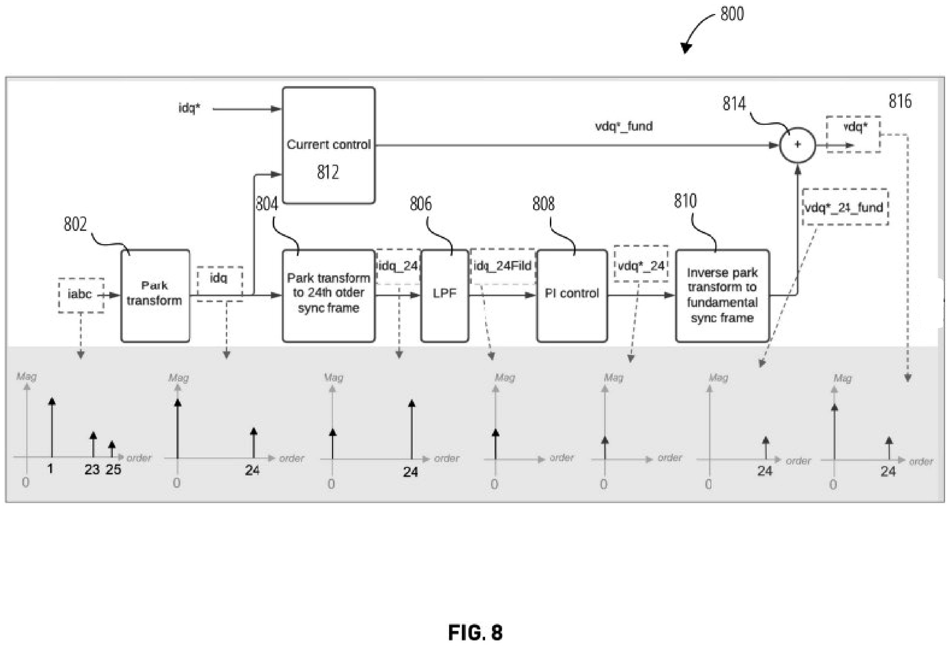

In addition, control process 706 may comprise operations that inject a synthesized harmonic into the output Vq and Vd, so that the output of block 712 comprises the synthesized ripple harmonic. An example of such operations is shown in FIG. 8.

FIG. 8 shows an example process 800 for injecting a harmonic component into a three-phase inverter output to reduce slot harmonics, in accordance with an embodiment. The process 800 may be performed by a processing device such as controller 112.

At block 802, the processing device may perform a Park transformation to a sensed three-phase current of a motor, which is in time-domain abc field, resulting in a two-phase Idq components in the rotating DQ field.

Current control block 812 is performed based on this Id an Iq and a reference Id* and Iq* current, which may be determined based on a torque command. The current control block 812 may determine voltage components Vd* and Vq* in the fundamental frame, corresponding to the fundamental frequency of the motor (e.g., rotations per unit of time). As such, blocks 802 and 812 represent typical field oriented control (FOC) blocks for motor control. The input sensed current Iabc may comprise a first fundamental harmonic component 1, and additional harmonic components such as 23rd and 25th harmonic as shown in the corresponding harmonic graph. The harmonic graph of the Idq components comprise the magnitude of the fundamental frequency, and the magnitude at the 24th order.

The remaining blocks 804, 806, 808, and 810 are implemented to generate a harmonic that counteracts or cancels out the slot frequency of the motor. These blocks take the Idq (which is based dq representation of the sensed motor current) to align the compensating harmonic with the actual motor current and position.

At block 804, the processing device performs a Park transform on Idq components, to the 24th order sync frame. More generally, this Park transform can be performed to the Mth order sync frame, where M is N/Z where N is the slot harmonic (e.g., 72), and Z is the number of pole pairs of the motor (e.g., 3). The resulting harmonic profile is swapped, such that the fundamental component moves to the Mth order, and the Mth order is moved to the fundamental component.

At block 806, the processing device applies a low pass filter (e.g., a digital low pass filter) to the Idq components in the 24th order sync frame, thereby removing the unwanted components (e.g., those at the fundamental frequency), resulting in the component previously at the 24th order being isolated and passed to the next block. In such a manner, the processing device performs isolation of harmonic currents based on sensed motor current feedback. This current feedback is used as input to a harmonic control algorithm that uses multiple reference frames and accounts for negatively sequenced currents. The system may use a speed-based adaptive filter to isolate targeted currents to be fed as input to the harmonic control algorithm, based on rotor fundamental frequency. This allows for reliable harmonic current regulation, even as the speed of the motor varies over time.

At block 808, the processing devices applies a proportional integral (PI) control algorithm to the filtered 24th order sync frame Idq component, resulting in a corresponding Vdq in the 24th order sync frame. The processing device may then generate voltage commands to control the current in this frame, to a desired value, using scheduled proportional integral (PI) gains. The control scheme used to maintain the compensating harmonic currents may be heavily integral oriented. For example, the integral parameter may be greater than the proportional parameter.

Generally, the controller 808, current control block 812, and control process block 706 may comprise parameters (e.g., gains) and a feedback loop that generates a target output voltage (e.g., in DQ space) based on a target current (e.g., also in DQ space).

At block 810, the processing device applies an inverse park transform to the fundamental sync frame, resulting in moving the harmonic component back to the Mth order (e.g., 24) in the fundamental frame θ1.

At block 814, the harmonic Vdq component to the Mth order (shown as vdq*_24_fund) in θ1 is combined with the general Vdq command also in θ1, to generate an output voltage command 816, labeled as vdq*. The output voltage command 816 comprises both the general output voltage command to cause the desired rotation of the motor, and the harmonic ripple to compensate for the slot harmonics. The output voltage command 816 may be a rotating field in θ1 space. As described with respect to FIG. 7, this Vdq may be processed at blocks 708, 710, and 712, to generate modulated space vectors with the built in synthesized harmonic ripple (at harmonic M). This may reduce cross order degradation of a motor, and reduce audible motor noise (e.g., at the 72^{nd} Order, and reduce motor ripple (e.g., the 18^{th} Order).

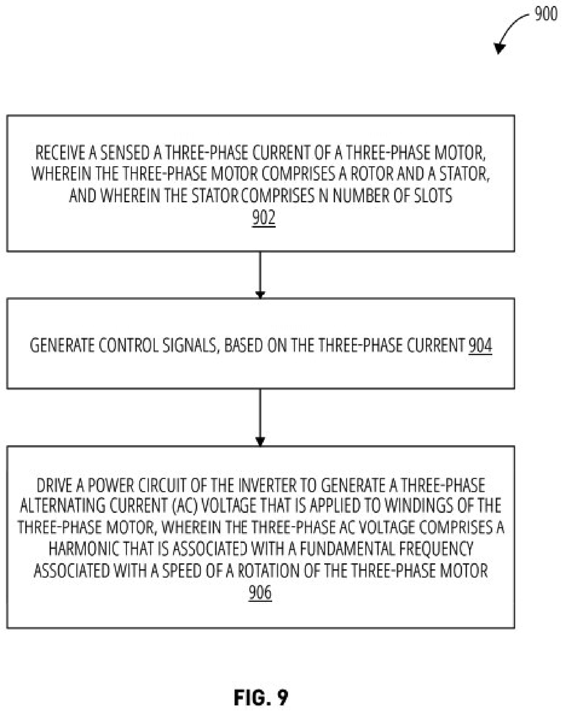

FIG. 9 shows a flow diagram of a method 900 which may reduce slot harmonics, in accordance with an embodiment. The method 900 may be performed by processing logic that may comprise hardware (circuitry, dedicated logic, etc.), software (such as is run on a general purpose computer system or a dedicated machine), firmware, or a combination.

The method 900 may be performed by a controller of an EV. The EV comprises a battery pack, an electric motor, a drive circuit comprising a plurality of power semi-conductors coupled to a direct current (DC) bus of the EV and coupled to the electric motor, the plurality of power semi-conductors configured to drive the electric motor, as described in other sections.

At block 902, processing logic may receive a sensed a three-phase current of a three-phase motor, wherein the three-phase motor comprises a rotor and a stator, and wherein the stator comprises N number of slots. The three-phase motor may comprise a permanent magnet three-phase motor.

In an embodiment, the rotor of the motor comprises magnets which are aligned axially along the rotor. An example of this straight alignment is shown with respect to rotor 302, in contrast to the staggered alignment of magnets shown with respect to rotor 304. In this manner, processing logic may account for slot harmonics by injecting a ripple of the Nth harmonic without relying on hardware design or fabrication to compensate for the slot harmonics.

At block 904, processing logic may generate control signals, based on the three-phase current. The control signals may comprise three PWM signals corresponding to a desired three-phase AC voltage.

At block 906, processing logic may drive a power circuit of the inverter to generate a three-phase alternating current (AC) voltage that is applied to windings of the three-phase motor, wherein the three-phase AC voltage comprises a harmonic that is associated with a fundamental frequency associated with a speed of a rotation of the three-phase motor. In an embodiment, the harmonic comprises an order of N that is relative to the fundamental frequency associated with the speed of the rotation of the three-phase motor, e.g., the harmonic being compensated is resulting from slot harmonics. Additionally, or alternatively, the disclosed system and techniques may compensate for non-slot harmonics. For example, a motor may exhibit a dominant 18th order, which may be caused from a combination of (number of phases) x (number of poles). An example motor with number of phases =3, and number of poles =6, therefore may have a dominant harmonic of 18th order (3 x 6 = 18). The method disclosed here can be applied to mitigate or control the 18th order harmonic discussed above, or another targeted harmonic.

In an embodiment, generating the three-phase AC voltage comprising the harmonic with the order of N comprises combining, at block 904, a rotating voltage reference frame with the harmonic to a second rotating voltage reference frame that is determined based on a target torque command.

For example, at block 904, processing logic may generate a rotating voltage reference frame with the harmonic as described with respect to blocks 804, 806, and 808. Processing logic may generate a second rotating voltage reference frame that is determined based on a target torque command, as described with respect to block 812. This second rotating voltage reference frame is the general input that rotates the motor, and the rotating voltage reference frame with the harmonic (e.g., to the N order) is the ripple voltage and current that compensates for the slot frequency.

In an embodiment, at block 904, generating the rotating voltage reference frame with the harmonic comprises transforming, by processing logic, the three-phase current to a rotating current reference frame (e.g., with a Park transform as described with respect to block 802), and adding the harmonic to the rotating current reference frame by applying a park transform with an order of M relative to the fundamental frequency (e.g., at block 804). The resulting signal is a modified rotating current reference frame (e.g., Id and Iq in the Mth order frame). Processing logic may transform the modified rotating current reference frame to the rotating voltage reference frame with the harmonic to the order of M, with a proportional integral (PI) algorithm (e.g., block 808). It should be understood that block 808 may implement a different controller such as a proportional integral derivative controller, or other controller. In an embodiment, M is one third of N, because each of the three phases may comprise M order harmonics, and when the three-phases are fed to the motor, these M harmonics are combined to form N order harmonics that compensate for the slot harmonics also of the Nth order.

In an embodiment, at block 904, generating the rotating voltage reference frame with the harmonic further comprises applying an adaptive low pass filter to the rotating current reference frame with the harmonic (e.g., at block 806), and applying the PI algorithm to an output of the adaptive low pass filter (e.g., at block 808).

In an embodiment, at block 904, processing logic may adjust a cut off frequency of the adaptive low pass filter based on the speed of the rotation of the three-phase motor. For example, in response to detecting an increased speed of the rotor, processing logic may adjust the cut off frequency higher, and/or in response to detecting a decreased speed of the rotor, processing logic may adjust the cut off frequency lower.

In an embodiment, at block 904, processing logic sets an integral parameter of the PI algorithm as greater than a proportional parameter of the PI algorithm. The proportional component of the controller increases or reduces the rise time and response of the plant (the relationship between the input current and the output voltage of the controller), and does not change the phase response of the plant. The integral component of the controller modifies the phase of the plant and has no effect on the gain of the plant. As such, processing logic may, at block 904, adjust the phase of the harmonic component N with the I component of the controller, and adjust the magnitude of the harmonic component N with the P component of the controller.

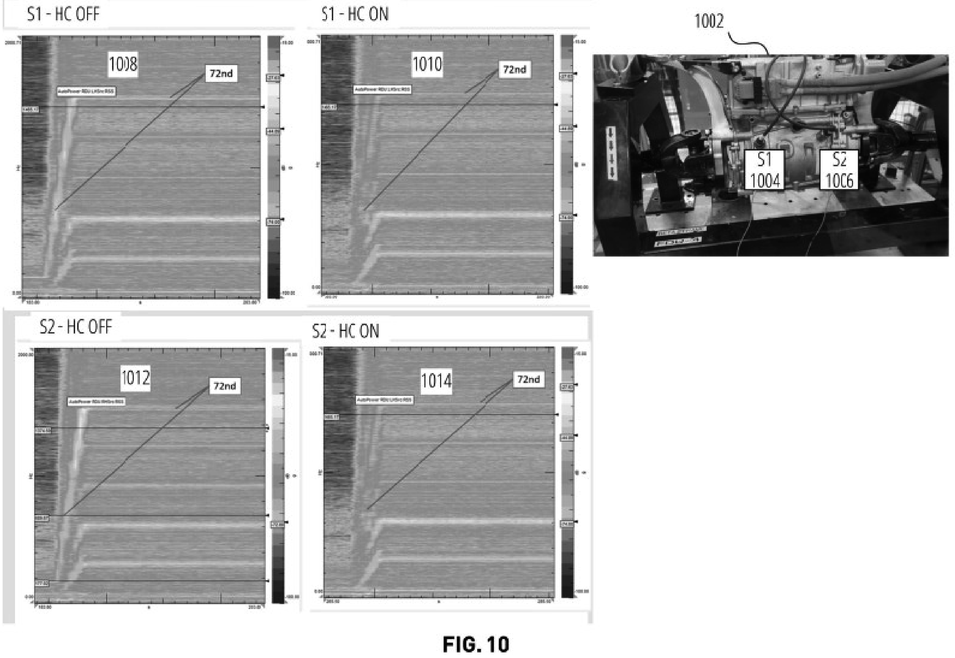

FIG. 10 shows example measurements associated with motor harmonics, in accordance with an embodiment. Graphs 1008 and 1012 show vibrational harmonics of a motor 1002, measured by a sensor 1004 and sensor 1006 (e.g., accelerometers) that are attached to the motor 1002. In Graphs 1008 and 1012, the harmonic compensation control is deactivated. In this example measurement, the measured motor 1002 comprises a rotor with 72 slots. The resulting 72nd harmonic from the slot harmonic is labeled and shown to be significant in intensity.

Graphs 1010 and 1014 show measured vibrational harmonics from the same sensors, respectively, but with harmonic compensation being activated. Performing this harmonic compensation control is described in other sections (e.g., with respect to FIGS. 1-9). As shown, when this harmonic compensation control is activated, the intensity of the measured 72nd harmonic is reduced, compared to graphs 1008 and graphs 1012 with the control deactivated.

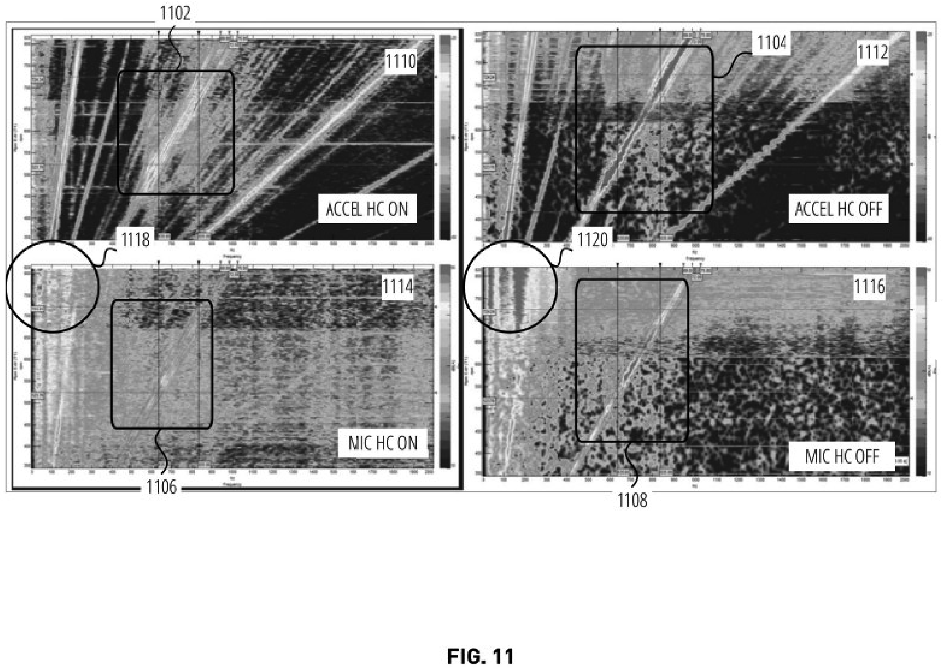

FIG. 11 shows example measurements associated with motor harmonics, in accordance with an embodiment.

Graph 1110 shows accelerometer measurements with harmonic compensation control being activated, while graph 1112 shows the accelerometer measurements with the harmonic compensation control being deactivated. It can be seen that at the strength of the Nth harmonic at region 1104 (without harmonic compensation control applied) is greater than at region 1102 (with harmonic compensation control applied).

Similarly, graph 1114 and graph 1116 shows microphone measurements of audible motor noise with and without harmonic compensation activated, respectively. The strength of the Nth harmonic is shown to be less at region 1106 (with harmonic compensation control applied) than at the same Nth harmonic shown in region 1108 (without harmonic compensation control applied).

In addition, secondary harmonics such as those shown at regions 1118 and 1120 respectively, also indicate reduced strength when the harmonic compensation control is activated. These secondary harmonics may potentially be caused by the slot harmonics, and by reducing the slot harmonics, these secondary harmonics can also be reduced. As such, FIG. 10 and FIG. 11 indicate that harmonic compensation control, can reduce vibration and audible noise caused by slot harmonics, using a control-based solution.

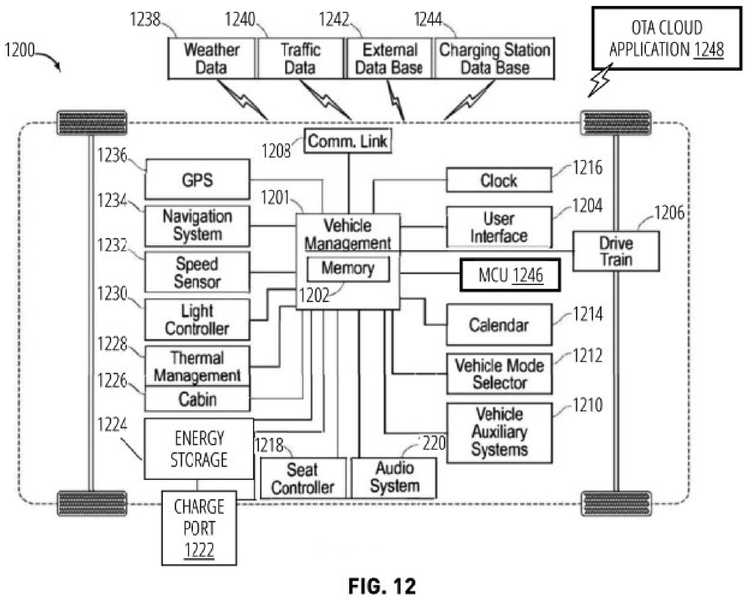

FIG. 12 is a high-level view of some embodiments of a vehicle 1200, in accordance with an embodiment. Vehicle 1200 can be an electric vehicle (EV), a vehicle utilizing an internal combustion engine (ICE), or a hybrid vehicle, where a hybrid vehicle utilizes multiple sources of propulsion including an electric drive system. Vehicle 1200 includes a vehicle on-board system controller 1201, also referred to herein as a vehicle management system, which is comprised of one or more processors (e.g., a central processing unit (CPU)). System controller 1201 also includes memory 1202, with memory 1202 being comprised of EPROM, EEPROM, flash memory, RAM, solid state drive, hard disk drive, or any other type of memory or combination of memory types.

In some embodiments, vehicle 1200 includes one or more internal networks by which system controller 1201 interfaces and communicates with one or more internal subsystems of vehicle 1200. System controller 1201 can also use the one or more internal networks to transfer communications to and from external locations. In some embodiments, the one or more internal networks can be communicably coupled to one or more networks through a network interface. The network interface can provide for wired and/or wireless communication. When used in a local area networking environment (or a wide area networking environment), the network interface can include an Ethernet interface and the one or more internal networks includes an Ethernet communication network (e.g., an Ethernet Ring, etc.) with an Ethernet Port. Other possible embodiments use other communication devices. For example, in some embodiments vehicle 1200 includes a modem for communicating across an internal network and/or with an external network.

In some embodiments, vehicle 1200 includes a charge port 1222 and one or more batteries (e.g., battery pack, etc.), and a battery charger, as an energy storage system 1224 that provides power to portions of vehicle 1200. The charge port 1222 is used for providing voltage to vehicle 1200 for charging the energy storage system 1224 (e.g., charging batteries by the use of, for example, an EVSE or other power source in a manner well-known in the art. The charging port 1222 can be used to transfer power from a battery of the energy storage system 1224 to an external location as part of a vehicle-to-grid power transfer. In some embodiments, charging port 1222 includes a communication path for communications between the system controller 1201 and the locations external to vehicle 1200 such as, for example, the power source providing power (voltage) to vehicle 1200 for charging batteries of the energy storage system 1224 and a utility distributed energy resource management system (DERMS) or an electric utility company and its facilities.

In some embodiments, energy storage system 1224 includes an inverter that generates voltage for transfer to an electric power grid. In some embodiments, the inverter converts DC voltage to AC voltage for transfer to the electric power grid. In some embodiments, the same inverter (or a separate invertor) converts DC voltage to AC voltage for charging a battery of the energy storage system 1224 or can provide DC to AC voltage conversion when providing power to an electrical power grid as part of a vehicle-to-grid operation. In the case of DC fast charging, the inverter may be bypassed to charge the battery pack directly with DC voltage from a charger that is connected to 1222.

In some embodiments, vehicle 1200 includes a user interface 1204 is coupled to vehicle management system 1201. Interface 1204 allows the driver, or a passenger, to interact with the vehicle management system, for example inputting data into the navigation system 1234, altering the heating, ventilation and air conditioning (HVAC) system via the thermal management system 1226, controlling the vehicle's entertainment system (e.g., radio, CD/DVD player, etc.), adjusting vehicle settings (e.g., seat positions, light controls, etc.), and/or otherwise altering the functionality of vehicle 1200. In some embodiments, user interface 1204 also includes means for the vehicle management system to provide information to the driver and/or passenger, information such as a navigation map or driving instructions (e.g., via the navigation system 1234 and GPS system 1236) as well as the operating performance of any of a variety of vehicle systems (e.g., battery pack charge level for an EV, fuel level for an ICE-based or hybrid vehicle, selected gear, current entertainment system settings such as volume level and selected track information, external light settings, current vehicle speed (e.g., via speed sensor 1232), current HVAC settings such as cabin temperature and/or fan settings, etc.) via the thermal management system 1226. Interface 405 may also be used to warn the driver of a vehicle condition (e.g., low battery charge level or low fuel level) and/or communicate an operating system malfunction (battery system not charging properly, low oil pressure for an ICE-based vehicle, low tire air pressure, etc.). Vehicle 1200 can also include other features like an internal clock 1216 and a calendar 1214.

In some embodiments, user interface 1204 includes one or more interfaces including, for example, a front dashboard display (e.g., a cockpit display, etc.) , a touch-screen display (e.g., a pilot panel, etc.), as well as a combination of various other user interfaces such as pushbutton switches, capacitive controls, capacitive switches, slide or toggle switches, gauges, display screens, warning lights, audible warning signals, etc. It should be appreciated that if user interface 1204 includes a graphical display, controller 1201 may also include a graphical processing unit (GPU), with the GPU being either separate from or contained on the same chip set as the processor.

Vehicle 1200 also includes a drive train 1206 that can include an internal combustion engine, one or more motors, or a combination of both. The vehicle's drive system can be mechanically coupled to the front axle/wheels, the rear axle/wheels, or both, and may utilize any of a variety of transmission types (e.g., single speed, multi-speed) and differential types (e.g., open, locked, limited slip). Drive train 1206 may also comprise one or more drive units each comprising a drive circuit and respective motor.

Drivers often alter various vehicle settings, either when they first enter the car or while driving, in order to vary the car to match their physical characteristics, their driving style and/or their environmental preferences. System controller 1201 monitors various vehicle functions that the driver may use to enhance the fit of the car to their own physical characteristics, such as seat position (e.g., seat position, seat height, seatback incline, lumbar support, seat cushion angle and seat cushion length) using seat controller 1218 and steering wheel position using an auxiliary vehicle system controller 1210. In some embodiments, system controller 1201 also can monitor a driving mode selector 1212 which is used to control performance characteristics of the vehicle (e.g., economy, sport, normal). In some embodiments, system controller 1201 can also monitor suspension characteristics using auxiliary vehicle system 1210, assuming that the suspension is user adjustable. In some embodiments, system controller 1201 also monitors those aspects of the vehicle which are often varied by the user in order to match his or her environmental preferences for the cabin 1226, for example setting the thermostat temperature or the recirculation controls of the thermal management system 1226 that uses an HVAC controller, and/or setting the radio station/volume level of the audio system using controller 1220, and/or setting the lights, either internal lighting or external lighting, using light controller 1230. Also, besides using user-input and on-board sensors, system controller 1201 can also use data received from an external on-line source that is coupled to the controller via communication link 1208 (using, for example, GSM, EDGE, UMTS, CDMA, DECT, WiFi, WiMax, etc.). For example, in some embodiments, system controller 1201 can receive weather information using an on-line weather service 1238 or an on-line data base 1242, traffic data 1240 for traffic conditions for the navigation system 1234, charging station locations from a charging station database 1244, etc. In some embodiments, communication link 1208 comprises an Ethernet communication link with an Ethernet Port for external communications.

The system controller 1201 can transfer information with the components described above over one or more internal networks, such as those, for example, described above. In some embodiments, the system controller 1201 is communicably coupled to one or more of these components via an Ethernet communication network (e.g., an Ethernet Ring, etc.). The Ethernet communication network can be used to transfer other data such as data related to, but not limited to, one or more of a driver-assistance system, telematics, over-the-air updates, etc.

The vehicle may comprise a thermal management system 1228 which may include one or more temperature sensors, one or more cooling systems (e.g., liquid lines, coolant, pump, fan, heatsink, heat pipe, cooler, evaporator, refrigeration, etc.).

Motor control unit 1246 may comprise one or more processing devices which may comprise a combination of hardware and/or software to generate control signals according to sensed information (e.g., motor position, reference voltage, etc.). The motor control unit 1246 may be configured to perform method 900, as described. For example, motor control unit 1246 may receive a sensed a three-phase current of a three-phase motor. The three-phase motor comprises a rotor and a stator, where the stator comprises N number of slots. The three-phase motor may comprise a permanent magnet three-phase motor. The rotor of the motor may comprise magnets which are in straight alignment axially along the rotor. The motor control unit 1046 may generate control signals, based on the three-phase current. The motor control unit 1246 may drive a power circuit of the inverter to generate a three-phase alternating current (AC) voltage that is applied to windings of the three-phase motor, where the three-phase AC voltage comprises a harmonic with an order of N relative to a fundamental frequency associated with a speed of a rotation of the three-phase motor.

The vehicle may communicate with OTA cloud application 1248 which is responsible for software and firmware updates to each of the updateable components of the vehicle (e.g., GPS 1236, navigation system 1234, speed sensor 1232, light controller 1230, thermal management 1226, energy storage system 1224, seat controller 1218, audio system 1220, vehicle aux systems 1210, vehicle mode selector 1212, calendar 1214, user interface 1204, clock 1216, vehicle management 1201, communications link 1208, or other components not shown. In an embodiment, OTA cloud application 1248 may configure MCU 1246 with harmonic parameters (e.g., M or N) for MCU 1246 to compensate for, as described. As such, a fleet of EVs with different motor characteristics (e.g., different number of slots) may receive corresponding harmonic parameters tailored to compensate for their motor characteristics.

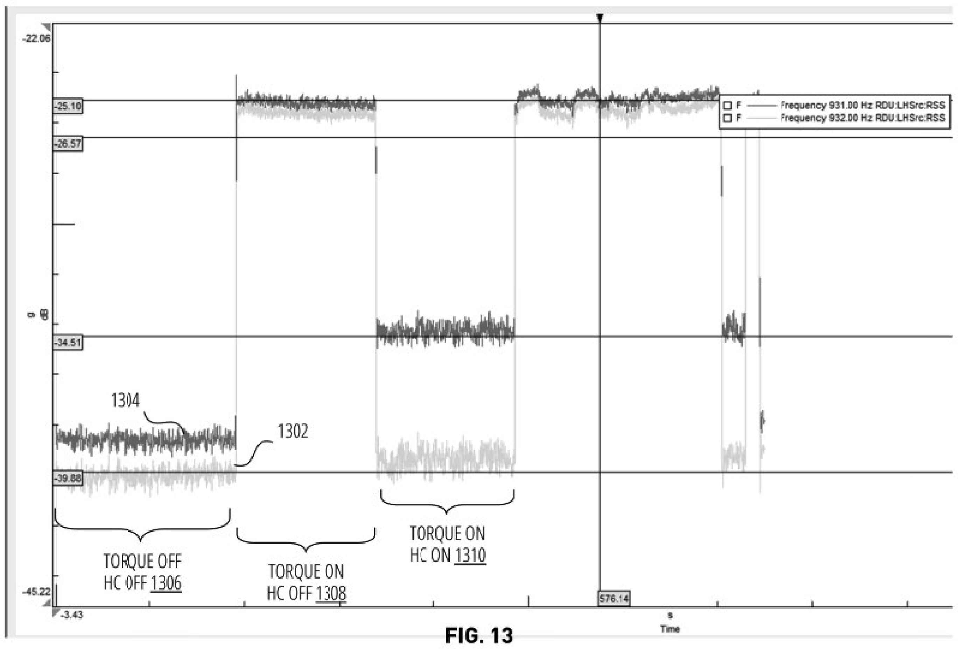

FIG. 13 shows a frequency cut plot with respect to motor torque and generated harmonics on that motor, in accordance with an embodiment. On this plot, the X axis represents time and the Y axis shows motor vibrations in decibels (dB). In the shown frequency cut plot, only a certain window of frequency of interest is shown. In this example, the specific plot shown is at 931 Hz, and the corresponding rotor speed is approximately 775 RPM, based on the relationship of frequency / slots * 60, or ([931/72] * 60).

The first plotted results 1302 is a narrow band plot (931 +/- 2 Hz) while the second plotted results 1304 represents a broader band (931 +/- 50 Hz). In other words, both results show that the disclosed harmonic compensation system can reduce the harmonic vibration of the motor using harmonic compensation, to near the 'torque off' vibration levels.

For example, stage 1306 shows when the motor torque is 'off' and harmonic compensation (HC) is also 'off'. Stage 1308 shows when the motor torque is turned 'on' and the system is not performing harmonic compensation. In this second stage 1308, the harmonic content can be seen to spike to about 25 dB for both bands.

At third stage 1310, however, the harmonic compensation is turned 'on' while the torque is still 'on'. The harmonic content of the motor measured in the narrow band 1302 can be seen to drop almost to levels of the 'torque off' stage 1306. Similarly, the harmonic content of the motor measured in the broader band 1304 can be seen to also be significantly reduced to approximately 34.5 dB. This shows a potential performance that can be achieved using the disclosed methods, which mitigate the harmonics caused by slot pass (in the case of 72nd) during torque production.

The frequency cut plot further show that harmonic content may still be prevalent with harmonic compensation on in wideband levels (e.g., 1304). This is to be expected, due to the potential addition of energy in high frequency bands from the harmonic compensation. Sensor and computation latencies could potentially lead to unavoidable side band excitations. In an embodiment, these side band excitations are reduced or minimized with controller tuning and sensor optimization.

Generally, the frequency cut plot shows an improvement on both wide and narrow bands using the disclosed harmonic compensation techniques.

It is to be understood that the above description is intended to be illustrative, and not restrictive. Many other embodiments will be apparent to those of skill in the art upon reading and understanding the above description. The scope should, therefore, be determined with reference to the appended claims, along with the full scope of equivalents to which such claims are entitled.

The foregoing description, for purpose of explanation, has been described with reference to specific embodiments. However, the illustrative discussions above are not intended to be exhaustive or to limit the described embodiments to the precise forms disclosed. Many modifications and variations are possible in view of the above teachings. The embodiments were chosen and described in order to best explain the principles and practical applications of the various embodiments, to thereby enable others skilled in the art to best utilize the various embodiments with various modifications as may be suited to the particular use contemplated.

## Claims

1. A system comprising
a three-phase motor comprising a rotor and a stator, wherein the stator comprises N number of slots; and
an inverter, configured to:
receive a sensed a three-phase current of the three-phase motor, and
generate, based on the three-phase current, a three-phase alternating current (AC) voltage that is coupled to windings of the three-phase motor and cause a rotation of the rotor, wherein the three-phase AC voltage comprises a harmonic that is associated with a fundamental frequency associated with a speed of the rotation of the three-phase motor.

2. The system of claim 1, wherein the rotor comprises magnets which are aligned axially along the rotor.

3. The system of claim 1, wherein to generate the three-phase AC voltage comprising the harmonic comprises combining a rotating voltage reference frame with the harmonic to a second rotating voltage reference frame that is determined based on a target torque command.

4. The system of claim 3, wherein to generate the rotating voltage reference frame with the harmonic comprises to:
transform the three-phase current to a rotating current reference frame,
add the harmonic to the rotating current reference frame by applying a park transform with an order of M relative to the fundamental frequency, resulting in a modified rotating current reference frame, and
transform the modified rotating current reference frame to the rotating voltage reference frame with the harmonic to the order of M, with a proportional integral (PI) algorithm.

5. The system of claim 4, wherein M is one third of N.

6. The system of claim 4, wherein to generate the rotating voltage reference frame with the harmonic further comprises to:
apply an adaptive low pass filter to the rotating current reference frame with the harmonic, and
apply the PI algorithm to an output of the adaptive low pass filter.

7. The system of claim 6, wherein the adaptive low pass filter is configured to adjust a cut off frequency based on the speed of the rotation of the three-phase motor.

8. The system of claim 6, wherein an integral parameter of the PI algorithm is greater than a proportional parameter of the PI algorithm.

9. The system of claim 1, wherein the three-phase motor comprises an induction motor.

10. An electric vehicle comprising:
a battery pack;
a three-phase motor comprising a rotor and a stator, wherein the stator comprises N number of slots; and
an inverter, to receive energy from the battery pack, configured to:
receive a sensed a three-phase current of the three-phase motor, and
generate, based on the three-phase current, a three-phase alternating current (AC) voltage that is coupled to windings of the three-phase motor and cause a rotation of the rotor, wherein the three-phase AC voltage comprises a harmonic that is associated with a fundamental frequency associated with a speed of the rotation of the three-phase motor.

11. The electric vehicle of claim 10, wherein to generate the three-phase AC voltage comprising the harmonic comprises combining a rotating voltage reference frame with the harmonic to a second rotating voltage reference frame that is determined based on a target torque command.

12. The electric vehicle of claim 11, wherein to generate the rotating voltage reference frame with the harmonic comprises to:
transform the three-phase current to a rotating current reference frame,
add the harmonic to the rotating current reference frame by applying a park transform with an order of M relative to the fundamental frequency, resulting in a modified rotating current reference frame, and
transform the modified rotating current reference frame to the rotating voltage reference frame with the harmonic to the order of M, with a proportional integral (PI) algorithm.

13. The electric vehicle of claim 12, wherein to generate the rotating voltage reference frame with the harmonic further comprises to:
apply an adaptive low pass filter to the rotating current reference frame with the harmonic, and
apply the PI algorithm to an output of the adaptive low pass filter.

14. A method, performed by a processing device of an inverter, comprising:
receiving a sensed a three-phase current of a three-phase motor, wherein the three-phase motor comprises a rotor and a stator, and wherein the stator comprises N number of slots; and
generating control signals, based on the three-phase current; and
driving a power circuit of the inverter to generate a three-phase alternating current (AC) voltage that is applied to windings of the three-phase motor, wherein the three-phase AC voltage comprises a harmonic that is associated with a fundamental frequency associated with a speed of a rotation of the three-phase motor.

15. The method of claim 14, wherein generating the control signals comprises combining a rotating voltage reference frame with the harmonic to a second rotating voltage reference frame that is determined based on a target torque command.
